Europäisches Patentamt

European Patent Office

Office européen des brevets

(11) Veröffentlichungsnummer: **0 255 883 B1**

## (12) EUROPÄISCHE PATENTSCHRIFT

(45) Veröffentlichungstag der Patentschrift: 04.09.91

(51) Int. Cl.⁵: **F16K 31/02**

(21) Anmeldenummer: 87110266.1

(22) Anmeldetag: 16.07.87

(54) **Durchflussregelventil für Massenströme gasförmiger Medien.**

(30) Priorität: 07.08.86 CH 3168/86

(43) Veröffentlichungstag der Anmeldung:
17.02.88 Patentblatt 88/07

(45) Bekanntmachung des Hinweises auf die
Patenterteilung:
04.09.91 Patentblatt 91/36

(84) Benannte Vertragsstaaten:
AT BE CH DE ES FR GB IT LI NL SE

(56) Entgegenhaltungen:
CH-A- 418 759
GB-A- 2 146 411
US-A- 2 960 303
US-A- 3 835 659

Prospekt "Mass Flow Controllers"Tylan
Corp. USA

(73) Patentinhaber: **PLASMA-INVENT AG**
**Oberleh 2**
**CH-6300 Zug(CH)**

(72) Erfinder: **Muntwyler, Peter**
**Allmenweg 7**
**CH-5610 Wohlen(CH)**

(74) Vertreter: **Hammer, Bruno, Dr.**
**c/o Gebrüder Sulzer AG, KSR/Patente/0007**
**CH-8401 Winterthur(CH)**

## Beschreibung

Die Erfindung betrifft ein Durchflussregelventil für Massenströme gasförmiger Medien, insbesondere für Plasma-Spritzanlagen, dessen Ventilkörper mit Hilfe einer kontinuierlichen, linearen, thermischen Expansion eines Dehnungskörpers verstellbar ist, wobei der den Ventilkörper tragende, dem Gasstrom ausgesetzte Dehnungskörper sich in einem nach aussen gasdicht verschlossenen Hohlraum eines Ventilgehäuses erstreckt, das in einer Richtung von der Gasleitung durchsetzt ist, die einen im Ruhezustand durch den Ventilkörper abgedeckten Ventilsitz enthält.

Ein Durchflussregelventil der genannten Art ist bekannt aus dem US-Patent 2,960,303. Bei dieser bekannten Konstruktion besteht der Dehnungskörper aus einem Metallstreifen, der mit einem Ventilkörper versehen ist, der seinerseits ohne Vorspannung auf dem Ventilsitz aufliegt. Die Dichtkraft gegen das anströmende Gas ist daher relativ gering. Bei geschlossenem Ventil bildet der Streifen eine ebene Fläche, ohne eine definierte Richtung, in die er bei seiner Erwärmung und Ausdehnung ausweicht. Besonders bei geringem oder fehlendem Gasdruck kann der Metallstreifen daher durch eine willkürliche Knickung beschädigt werden. Seine mechanische Festigkeit ist relativ gering.

Aus dem US-Patent 3,835,659 ist ein Auf/Zu-Ventil im Flüssigkeitsstrom vom Kondensor zum Verdampfer einer Kälteanlage bekannt; dieses Ventil wird durch einen Dehnungskörper geregelt, der bei einer gegebenen Temperatur sprungartig seine Länge ändert. Eine kontinuierliche Regelung der Durchflussmenge des strömenden Mediums ist mit dieser Konstruktion nicht möglich.

In dem CH-Patent 418 759 wird ein ferngesteuertes Heizungsventil gezeigt und beschrieben, bei dem ein als Dehnungskörper wirkender Biegebalken, der an seinen Enden eingespannt ist, durch eine elektrische Heizwicklung aufgeheizt wird, um ein Ventil zu öffnen. Da der Biegebalken von dem Strom des Strömungsmediums abgeschirmt ist, kühlt er sich beim Ausschalten der Heizwicklung nur langsam ab; das System reagiert also träge.

Bei diesen beiden bekannten Konstruktionen sind darüberhinaus mechanische Gleitführungen und Rückstellfedern notwendig, durch die undefinierte Reibungskräfte in die Durchflussregelung eingebracht werden, die die Regelgenauigkeit negativ beeinflussen.

Weiterhin ist ein Durchflussregelventil bekannt (Prospekt "Mass Flow Controllers" der Firma Tylan Corporation, Carson/USA), bei dem eine Kugel als Ventilkörper an einem dünnen, vertikal angeordneten Rohr befestigt ist, das den Dehnungskörper bildet. Im Inneren dieses Rohres befindet sich ein Wärmeübertragungsmedium und ein Widerstand-Heizelement. Der nach Anlegen einer Spannung durch das Heizelement fliessende Strom bewirkt eine Aufheizung und eine Ausdehnung des dünnen Rohres. Der Gesamthub des Ventilkörpers beträgt dabei lediglich einige Tausendstel mm. Das erfordert zur Gewährleistung der notwendigen Regelgenauigkeit sehr präsis bearbeitete Ventilsitze, die daher z.B. aus Saphir bestehen. Da durch eine Aufheizung des Rohres nur eine Verlängerung bewirkt wird, kann bei dieser Konstruktion nur eine Regelung der Ruhestellung "ganz offen" zu geringeren Durchflussquerschnitten erfolgen, was häufig unerwünscht ist.

Aufgabe der Erfindung ist es, ein Durchflussregelventil der eingangs genannten Art zu schaffen, das eine grosse mechanische Festigkeit, eine hohe Regelgenauigkeit - was neben einem möglichst grossen Oeffnungshub eine rasche Aufheizung und Abkühlung des Dehnungskörpers erfordert - und eine grosse Dichtkraft besitzt.

Mit der vorliegenden Erfindung wird diese Aufgabe dadurch gelöst, dass der Dehnungskörper im quer und senkrecht zur Gasleitung verlaufenden, als Bohrung ausgebildeten, Hohlraum unter einer Vorspannung ausgespannt ist und dass der Dehnungskörper als dünnes Röhrchen ausgebildet ist und eine im Bereich der Gasströmung liegende Knickstelle aufweist, die in Richtung der Gasströmung aus der direkten Verbindungsgeraden seiner Einspannstellen verschoben ist.

Die Ausbildung des Dehnungskörpers als Rohr verleiht diesem eine grosse mechanische Festigkeit und Stabilität; bei einer geforderten Mindestfestigkeit kann daher die Wandstärke eines Rohres geringer gehalten werden als bei einem Streifen. Daraus ergibt sich eine relativ geringe Masse, die sich schnell erwärmt und abkühlt. Weiterhin hat der geringe Querschnitt einen hohen elektrischen Widerstand zur Folge, wodurch der Heizstrom relativ niedrig gehalten werden kann.

Die erforderliche grosse Dichtkraft wird durch die Vorspannung des Röhrchens sichergestellt.

Die Abwicklung und Auslenkung des Dehnungskörpers aus der Verbindungsgeraden seiner Einspannstelle ermöglichen einen grossen Oeffnungshub, wobei beispielsweise ein "Uebersetzungsverhältnis" des Hubes zur Dehnung des gespannten Dehnungskörpers von etwa 100 : 1 erreicht wird; bei Raumtemperatur beträgt der Winkel, um den der Dehnungskörper gegenüber der Verbindungsgeraden ausgelenkt ist, beispielsweise etwa 3°.

Wie bei der eingangs genannten Konstruktion wird der Dehnungskörper am einfachsten direkt durch einen elektrischen Strom aufgeheizt. Falls eine elektrische Beheizung nicht möglich oder erwünscht ist, ist es jedoch auch möglich, die Aufheizung des Röhrchens mit Hilfe eines in seinem Inneren fliessenden, temperierten Gasstromes vorzunehmen.

Zweckmässigerweise besteht der Hohlraum des Ventilgehäuses in einer Querbohrung, in deren Bereich der Ventilkörper von einer, die Gasströmung führenden Hülse umgeben ist.

Im folgenden wird die Erfindung anhand eines Ausführungsbeispiels im Zusammenhang mit der Zeichnung näher erläutert.

Fig. 1 zeigt als Schnitt I-I von Fig. 2 einen Längsschnitt durch das neue Ventil;

Fig. 2 ist der Schnitt II-II von Fig. 1.

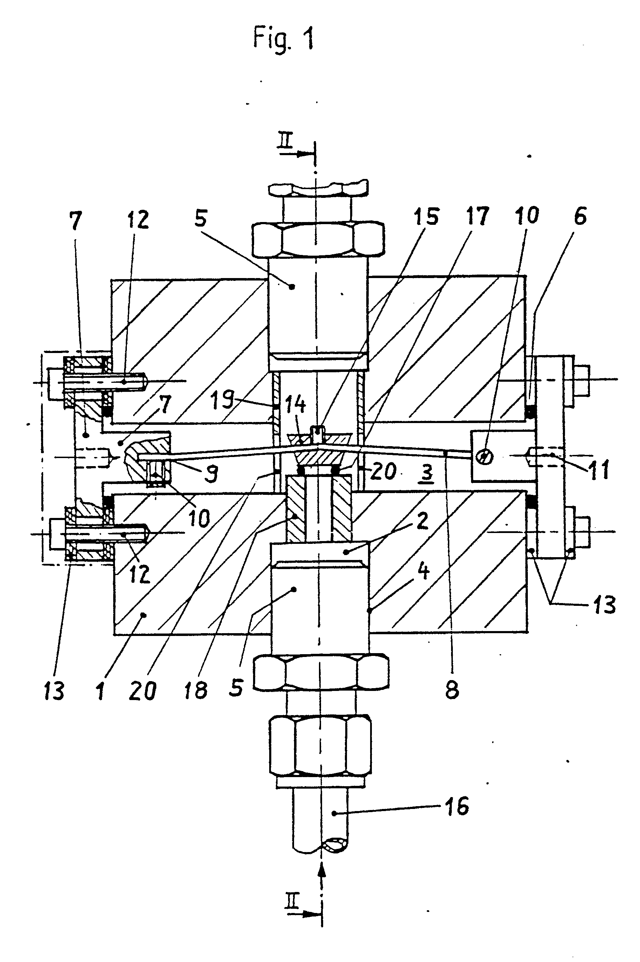

Das beispielsweise aus einem Leichtmetall-Block bestehende Ventilgehäuse 1 (Fig. 1) ist jeweils von einer ersten Bohrung 2 und einer dazu quer und senkrecht verlaufenden zweiten Bohrung 3 durchsetzt. An der Bohrung 2 sind über Gewinde 4 Anschluss-Stutzen 5 angeschlossen, über die das Ventil in einen nicht weiter gezeigten Strömungsweg eines Gases integriert ist, dessen Massenfluss geregelt werden soll; die Strömungsrichtung des Gases ist in den Figuren von unten nach oben angenommen und durch Pfeile angedeutet.

In der Querbohrung 3, die über O-Ringe 6 durch Deckel 7 nach aussen gasdicht abgeschlossen ist, ist ein Dehnungskörper 8 ausgespannt. Dieser besteht aus einem Röhrchen aus Metall, dessen Aussen- bzw. Innendurchmesser beispielsweise 1 bzw. 0,6 mm betragen. Für einen Gasdruck von maximal 3 bar beträgt die Zugkraft der Vorspannung an dem Dehnungskörper 8 beispielsweise etwa 50 N.

Der Dehnungskörper 8 ist mit seinen Enden in Sackbohrungen 9 der metallenen Deckel 7 eingeführt und durch Gewindestifte 10 festgeklemmt. In der Darstellung der Fig. 1 ist dabei der rechte GEwindestift 10 in seiner richtigen Winkellage relativ zu den übrigen Teilen wiedergegeben, während die linke schnittdarstellung um 90° gedreht ist.

An seiner Aussenseite weist jeder Deckel 7 eine Gewindebohrung 11 für den Anschluss einer nicht gezeigten elektrischen Stromquelle auf. Diese dient als Heizquelle für die Temperierung des Dehnungskörpers 8.

Die Deckel 7 sind mit Hilfe von Schraubenbolzen 12 am Gehäuse 1 befestigt, wobei ihre elektrische Isolation gegenüber dem Gehäuse einmal durch die O-Ringe 6 und zum zweiten durch beispielsweise aus einem glasfaserverstärkten Polysulfon bestehende Isolationsbüchsen 13 gewährleistet ist. Falls erforderlich, können die Deckel 7 zusätzlich durch eine auf der linken Seite gestrichelt angedeutete Kunststoffhaube abgedeckt sein.

Wie Fig. 1 erkennen lässt, ist der Dehnungskörper 8 aus der Ebene der direkten Verbindungsgeraden in Richtung des Gasflusses ausgelenkt, so dass eine Knickstelle entsteht. Diese Knickstelle, an der der Dehnungskörper 8 gegen die Anströmseite des Gases in einem Winkel von 175° einschliesst, ist überbrückt von einem Ventilkörper 14, der auf den Dehnungskörper 8 aufgefädelt und durch einen Gewindestift 15 festgeklemmt ist.

Der Ventilkörper 14 steuert den Massenfluss durch die Gasleitung 16 in Verbindung mit einem Ventilsitz 17, der beispielsweise aus einem O-Ring aus Gummi besteht. Dieser O-Ring 17 ist in einer Büchse 18 gelagert, die in den Gehäuseblock 1 am Ende der "Eintrittseite" der Gasströmung eingeschraubt ist.

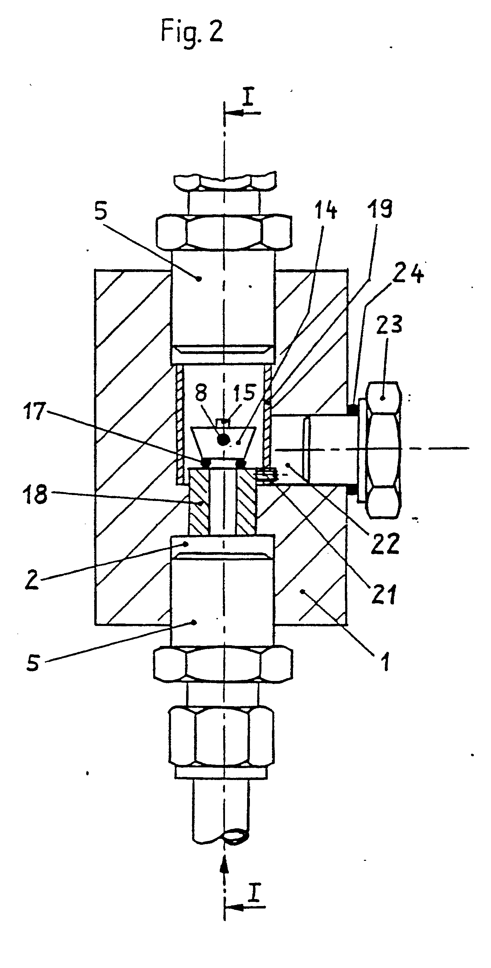

Der in die Querbohrung 3 hineinragende Teil der Büchse 18 sowie der Ventilsitz 17 und der Ventilkörper 14 sind mit Abstand von einer Hülse 19 umgeben, die in den "gasaustrittsseitigen" Teil der Bohrung eingesetzt und durch einen weiteren Gewindestift 21 (Fig. 2) fixiert ist. Für den Durchtritt und die Bewegung des Dehnungskörpers 8 in bzw. entgegen der Gasflussrichtung befinden sich in der Hülse 19, die die Aufgabe hat, den Gasfluss in Längsrichtung der Bohrung 2 zu leiten und seine Ausbreitung in die Querbohrung 9 möglichst zu verhindern, Schlitze 20.

In der dritten Raumdimension, d.h. senkrecht zu den Bohrungen 2 und 3, sind auf der Höhe der Einspannstellen und im Bereich der Büchse 18 Montagebohrungen 22 (Fig. 2) vorgesehen, die nach aussen durch Gewindestopfen 23 verschlossen und durch O-Ringe 24 abgedichtet sind.

Das neue Ventil ist bei Raumtemperatur geschlossen; seine Schliesskraft beträgt bei den angegebenen Abmessungen und Vorspannungen etwa 4 N. Es öffnet bei thermischer Ausdehnung seines Dehnungskörpers 8, wobei die relativ geringe Längenänderung des Dehnungskörpers 8 einen etwa 100-fachen Hub des Ventilkörpers 14 bewirkt.

Die thermische Ausdehnung des Körpers 8 wird durch die Wärmeentwicklung beim Fliessen eines elektrischen Stromes erzeugt, wobei der Heizstrom direkt vom Ausgangssignal eines Reglers beeinflusst wird, in dem als elektrische Spannungen ein eingestellter Sollwert und ein von einem handelsüblichen Gasflussmesser erzeugter Istwert für den Gasstrom miteinander verglichen werden.

Statt des geregelten Betriebes ist es jedoch auch möglich, das neue Ventil "gesteuert" zu betreiben, d.h. durch den Dehnungskörper 8 einen vom Gasfluss-Sollwert abhängigen konstanten Strom fliessen zu lassen, ohne dass ein Istwert gemessen und auf einen Regler gegeben wird. Bei dieser Betriebsweise stellt sich dann ein Gleichgewicht zwischen der für einen bestimmten Gasfluss konstanten Heizung und der Abkühlung des Dehnungskörpers 8 durch den fliessenden Gasstrom ein.

## Patentansprüche

**1.** Durchflussregelventil für Massenströme gasförmiger Medien, insbesondere für Plasma-Spritzanlagen, dessen Ventilkörper (14) mit Hilfe einer kontinuierlichen, linearen, thermischen Expansion eines Dehnungskörpers (8) verstellbar ist, wobei der den Ventilkörper (14) tragende, dem Gasstrom ausgesetzte Dehnungskörper (8) sich in einem nach aussen gasdicht verschlossenen Hohlraum (3) eines Ventilgehäuses (1) erstreckt, das in einer Richtung von der Gasleitung (2, 16) durchsetzt ist, die einen im Ruhezustand durch den Ventilkörper (14) abgedeckten Ventilsitz (17) enthält, dadurch gekennzeichnet, dass der Dehnungskörper (8) im quer und senkrecht zur Gasleitung (2,16) verlaufenden, als Bohrung (3) ausgebildeten, Hohlraum unter einer Vorspannung ausgespannt ist und dass der Dehnungskörper (8) als dünnes Röhrchen ausgebildet ist und eine im Bereich der Gasströmung liegende Knickstelle aufweist, die in Richtung der Gasströmung aus der direkten Verbindungsgeraden seiner Einspannstellen (9, 10) verschoben ist.

**2.** Ventil nach Anspruch 1, dadurch gekennzeichnet, dass der Ventilkörper (14) im Bereich der Querbohrung (3) von einer die Gasströmung führenden Hülse (19) umgeben ist.

**Claims**

**1.** A flow control valve for mass flows of gaseous media, more particularly for plasma spraying installations, the valve lid (14) being adjustable by means of a continuous linear thermal expansion of an expansion member (18), the same, which carries the lid (14) and experiences the gas flow, extending in a cavity (3) of a valve body (1), the cavity (3) being sealed off in gas-tight manner from the outside, the gas line (2, 16) extending through the valve body (1) in one direction, the gas line comprising a valve seat (17) which is covered by the valve lid (14) in the normal state, characterised in that the expansion member (8) is expanded by biasing in the cavity, which extends transversely and perpendicularly to the gas line (2, 16) and is in the form of a bore (3), and the expansion member (8) is in the form of a thin tube and has near the gas flow a bend displaced in the direction thereof from the direct straight line connecting its clamping places (9, 10).

**2.** A valve according to claim 1, characterised in that a sleeve (19) guiding the gas flow extends around the lid (14) near the transverse bore (3).

**Revendications**

**1.** Soupape de réglage du débit de flux massiques de fluides gazeux, en particulier pour installations de projection de plasma, dont le corps de soupape (14) est déplaçable à l'aide d'une expansion thermique linéaire et continue d'un corps de dilatation (8), le corps de dilatation (8), qui supporte le corps de soupape (14) et qui est exposé au courant gazeux, étant disposé dans une cavité (3), obturée hermétiquement vis-à-vis de l'extérieur, d'une cage (1) traversée dans une direction par la canalisation de gaz (2, 16) qui renferme un siège (17) obturé par le corps de soupape (14) à l'état de repos, caractérisée en ce que le corps de dilatation (8) est fixé sous précontrainte dans la cavité conformée en trou (3) et disposée de manière à traverser perpendiculairement la canalisation de gaz (2,16) et le corps de dilatation (8) est conformé en petit tube mince et comporte un coude qui est situé dans la zone de l'écoulement gazeux et qui est décalé dans le sens de cet écoulement par rapport à la droite de liaison directe de ses lieux de fixation (9, 10).

**2.** Soupape selon la revendication 1, caractérisée en ce que le corps de soupape (14) est entouré dans la région du trou transversal (3) par une douille (19) de guidage de l'écoulement gazeux.

Fig. 1

## Fig. 2